# EUROPEAN PATENT APPLICATION

(11) **EP 4 024 525 A1**
(43) Date of publication of application: **06.07.2022**
(21) Application number: 20901485.1
(22) Date of filing: 11.12.2020
(51) Int. Cl.: H01M 4/505

(54) **QUATERNARY POSITIVE ELECTRODE MATERIAL, POSITIVE ELECTRODE, AND BATTERY**

(30) Priority: 19.12.2019 CN 201911316650
(71) Applicant: SVOLT ENERGY TECHNOLOGY CO., LTD, Changzhou, Jiangsu 213200 (CN)
(72) Inventor: BAI, Yan, hangzhou, Jiangsu 213200 (CN); ZHANG, Shutao, hangzhou, Jiangsu 213200 (CN); PAN, Hailong, hangzhou, Jiangsu 213200 (CN); WANG, Zhuang, hangzhou, Jiangsu 213200 (CN)
(74) Representative: Novagraaf Technologies
(86) International application number: PCT/CN2020/135883
(87) International publication number: WO 2021/121168

(57) **Abstract**

The present invention discloses a quaternary cathode material, an cathode and a battery. Particularly, the present invention provides the quaternary cathode material with a chemical structural formula: LiₓNi_{a'}Co_{b}Mn_{c'}Al_{d}M_{y}O₂, wherein 1≤x≤1.05,0<y≤0.025,0.3≤a'≤0.95,0.03≤b≤0.1,0.01≤c'≤0.05,0.01 ≤d≤0.05 and a'+b+c'+d=1; M is a dopant selecting from at least one of Zr, Al, B, Ti, Mg, Nb, Ba, Si, P, W, Sr and F. The quaternary cathode material has an α-NaFeO₂ type crystal structure. The space group of an X-ray diffraction pattern of the quaternary cathode material is R-3m, and the relationship between a cell parameter **c** of an axis **c** and a cell parameter **a** of an axis **a** is as follows: **c/a>4.943.** Therefore, the dopant can better improve the structural stability of the quaternary cathode material, and the quaternary cathode material has a better laminar crystal structure, which can improve the cycling stability and the thermal stability of the battery using the quaternary cathode material, increase the specific capacity of the battery and prolong the cycle life of the battery.

## Description

### Technical Field

The present invention relates to the technical field of batteries and in particular relates to a quaternary cathode material, a cathode and a battery.

### Background

At present, a lithium ion battery is widely applied to equipment such as a camera, a mobile phone, a notebook computer and an electric transportation means due to advantages, for example, stable voltage, high specific capacity, high energy density, long cycle life, environment-friendliness, of the lithium ion battery. The key factor which determines the performance of the lithium ion battery is the cathode material of the lithium ion battery. In a high energy lithium ion secondary battery, the used cathode material includes LiMn₂O₄ of a spinel structure, LiCoO₂ and LiNiO₂ of layered structures and the like. The lithium ion secondary battery with LiNiO₂ of the layered structure as the cathode material is given a lot of attention as a result of high charge and discharge capacity. However, LiNiO₂ cathode material is unstable in crystal structure and low in cycle life in a process of removing lithium repeatedly (i.e. repeated charging and discharging). Therefore, at present, part of Ni in LiNiO₂ is usually replaced by Co, Al and/or Mn to obtain a high nickel ternary cathode material or a quaternary cathode material, for example, part of Ni in LiNiO₂ is replaced by Co, Al and Mn jointly to obtain the quaternary cathode material NCMA. The quaternary cathode material not only keeps a characteristic of high specific capacity, but also can improve the stability of the crystalline texture, such that the cycle life of the battery using the quaternary cathode material can be prolonged and the thermal stability of the battery using the quaternary cathode material can be improved, and the specific capacity of the battery is improved and the cycle life of the battery is prolonged.

However, there is still improvement in current quaternary cathode material, cathode and battery.

### Summary

The present invention mainly aims to provide a quaternary cathode material, an cathode and a battery to solve the problem of insufficient cycling stability and thermal stability in the prior art.

The disclosure is made by the inventor based on discovery and cognition of the following truths and problems:
At present, part of Ni in LiNiO₂ is replaced by Co, Al and Mn jointly to obtain the quaternary cathode material. There is still a problem of poor structural stability, cycling stability of the battery taking the quaternary cathode material as the cathode, service life and service safety. Therefore, if a novel quaternary cathode material can be put forward, the structural stability of the quaternary cathode material can be better and has a better layered crystal structure, so that the cycling stability and thermal stability of the battery using the quaternary cathode material can be improved better and the solve can be solved to a great extent.

In one aspect of the present invention, the present invention provides a quaternary cathode material. According to the embodiment of the present invention, a chemical structural formula of the quaternary cathode material is LiₓNi_{a'} Co_{b}Mn_{c'} Al_{d}M_{y}O₂, in which 1≤x≤1.05,0<y≤0.025,0.3≤a'≤ 0.95,0.03≤b≤0.1,0.01≤c'≤0.05,0.01≤d≤0.05 and a'+b+c'+d=1; M is a dopant selecting from at least one of Zr, Al, B, Ti, Mg, Nb, Ba, Si, P, W, Sr and F. The quaternary cathode material has an α-NaFeO₂ type crystal structure. The space group of an X-ray diffraction pattern of the quaternary cathode material is R-3m, and in the X-ray diffraction pattern of the quaternary cathode material, the relationship between a cell parameter **c** of an axis c and a cell parameter **a** of an axis **a** is as follows: **c/a**>4.943.

Therefore, the dopant can inhibit mixed arrangement of kations and can better improve the structural stability of the quaternary cathode material. When the relationship between the cell parameter **c** of the axis **c** and the cell parameter **a** of the axis **a** of the quaternary cathode material is met, the quaternary cathode material has a better layered crystal structure and is better in structural stability, and the cycling stability and the thermal stability of the battery using the quaternary cathode material can be improved, so that the specific capacity of the battery is improved and the cycle life of the battery is prolonged.

According to the embodiment of the present invention, in the X-ray diffraction pattern of the quaternary cathode material, the relationship between the cell parameter c of the axis **c** and the cell parameter **a** of the axis **a** is as follows: **3a+5.555≤c≤3a+5.590.** Therefore, when the relationship between the cell parameter **c** of the axis c and the cell parameter **a** of the axis **a** is met, the quaternary cathode material has a better layered crystal structure and lithium ions are easily diffused in the layered structure, such that the specific discharge capacity of the battery using the quaternary cathode material can be improved.

According to the embodiment of the present invention, a numerical range of the cell parameter **a** of the axis **a** is 2.80-2.90, preferably 2.86-2.87, and a numerical range of the cell parameter **c** of the axis **c** is 14.10-14.30, preferably 14.19-14.20. Therefore, when the cell parameter **c** of the axis **c** and the cell parameter **a** of the axis **a** are in the range, the specific discharge capacity of the battery using the quaternary cathode material is further improved and the cycle life of the battery using the quaternary cathode material is further prolonged.

According to the embodiment of the present invention, in the X-ray diffraction pattern of the quaternary cathode material, diffraction peak intensities of a surface I₁₀₂, a surface I₀₀₆ and a surface I₁₀₁ meets a following relationship: R= (I₁₀₂+I₀₀₆)/I₁₀₁ and 0.4≤R≤0.44. Therefore, when the R value is in the range, the orderliness of a hexagonal crystal structure of the quaternary cathode material is high, so that de-intercalation of lithium ions in the crystal structure is facilitated and the structural stability and the thermal stability of the quaternary cathode material can be further improved. Therefore, the specific discharge capacity of the battery using the quaternary cathode material is improved and the cycle life of the battery using the quaternary cathode material is prolonged.

According to the embodiment of the present invention, in the X-ray diffraction pattern of the quaternary cathode material, diffraction peak intensities of a surface a surface I₁₀₃ and a surface I₁₀₄ meets a following relationship: 1.921<I_{003/}I₁₀₄≤2. Therefore, when the diffraction peak intensities of the surface 1103 and the surface 1104 meet the relationship, there is little mixed arrangement of lithium ions and nickel ions in the quaternary cathode material. The structural stability of the quaternary cathode material is high, and the cycling stability of the battery using the quaternary cathode material is better and the cycle life of the battery using the quaternary cathode material is longer.

According to the embodiment of the present invention, in the quaternary cathode material, a mass fraction of the dopant is 3000-8000ppm. Therefore, when the content of the dopant is in the range, the structural stability of the quaternary cathode material can be better improved. The specific discharge capacity of the battery using the quaternary cathode material is not reduced.

According to the embodiment of the present invention, the dopant is comprised of Al and Zr or Al, Mg and Zr. Therefore, in the quaternary cathode material formed by co-doping Al, Mg and Zr, the doped zirconium can enter a transition metal layer of the quaternary cathode material to stabilize the hexagonal structure thereof. The doped aluminum can enter a surface lithium layer of a quaternary cathode material matrix to further support the lithium layer better, and in a high voltage charging and discharging process, when a lot of lithium ions are embedded out, the doped aluminum can keep the stability of a lattice structure of the lithium layer; the doped magnesium can enable the valence state of the transition metal ions in the quaternary cathode material to be increased or decreased so as to further generate holes or electrons to change the energy band structure of the quaternary cathode material, and thus, the intrinsic electron conductivity is improved. The doped aluminum and magnesium further can inhibit mixed arrangement of Li⁺ and Ni²⁺ and more reversible lithium positions can be reserved, so that the reversible specific discharge capacity of the battery using the quaternary cathode material is improved. Thus, co-doping of aluminum, magnesium and zirconium can better improve the structural stability of the quaternary cathode material, the cycling stability and the thermal stability of the battery using the quaternary cathode material and the specific capacity of the battery at high voltage multiplying power. The battery using the quaternary cathode material is good in performance.

According to the embodiment of the present invention, in the quaternary cathode material, a mass fraction of the dopant Al is 2500-3500ppm, a mass fraction of the dopant Mg is 300-500ppm and a mass fraction of the dopant Zr is 2500-3500ppm. Therefore, when the content of the dopant is in the range, the structural stability of the quaternary cathode material can be better improved, and the specific discharge capacity of the battery using the quaternary cathode material is not reduced. The comprehensive performance of the battery using the quaternary cathode material is improved favorably.

According to another aspect of the present disclosure, a method for preparing any one quaternary cathode material is further provided. The method comprises the following steps of performing dry mixing on a nickel-cobalt-manganese-aluminum quaternary precursor, a lithium source and a dopant source to obtain a dry mixture; calcining the dry mixture in an oxygen containing atmosphere for 10-15 hours at 700-800°C to obtain a quaternary cathode material precursor; and cladding and calcining the quaternary cathode material precursor in the oxygen containing atmosphere by using an aluminum source and a boron source to obtain the quaternary cathode material, wherein a cladding and calcining temperature is 250-350°C and time is 4-8 hours.

In one aspect of the present invention, the present invention provides an cathode. According to the embodiment of the present invention, the cathode includes any one quaternary cathode material. Therefore, the cathode has all characteristics and advantages of any one quaternary cathode material, and no more detailed description is provided. In general, the cathode is stable in structure and has more excellent cycle performance and rate capability.

In another aspect of the present invention, the present invention provides a battery. According to the embodiment of the present invention, the battery includes an cathode, a anode, a diaphragm and an electrolyte, wherein the diaphragm is arranged between the cathode and the anode; at least a part of the cathode, at least a part of the anode and at least a part of the diaphragm are immersed in the electrolyte. Therefore, the battery has all characteristics and advantages of any one cathode, and no more detailed description is provided. In general, the battery has good cycling stability and thermal stability and has a higher specific capacity at high voltage multiplying power.

### Brief Description of the Drawings

The drawings of the description constituting a part of the disclosure are to provide further understanding of the present invention. The schematic embodiment and description thereof are used for explaining the present invention and do not limit the present invention improperly. In the drawings,
Fig. 1 illustrates an X-ray diffraction pattern of the quaternary cathode material prepared according to embodiment 1 of the present invention; and
Fig. 2 illustrates an X-ray diffraction pattern of the quaternary cathode material prepared according to a comparative example 1 of the present invention.

### Detailed Description of the Embodiments

It should be noted that in the absence of conflict, the embodiments of the present disclosure and features in the embodiments can be combined with one another. The present invention will be described in detail below with reference to the accompanying drawings and the examples.

In one aspect of the present invention, the present invention provides a quaternary cathode material. According to the embodiment of the present invention, a chemical structural formula of the quaternary cathode material is LiₓNi_{a'}CO_{b}Mn_{c'}Al_{d}M_{y}O₂, in which 1≤x≤1.05,0<y≤0.025,0.3≤a'≤ 0.95,0.03≤b≤0.1,0.01≤c'≤0.05,0.01≤d≤0.05 and a'+b+c'+d=1; M is a dopant selecting from at least one of Zr, Al, B, Ti, Mg, Nb, Ba, Si, P, W, Sr and F. The quaternary cathode material has a α-NaFeO₂ type crystal structure. The space group of an X-ray diffraction pattern of the quaternary cathode material is R-3m, and in the X-ray diffraction pattern of the quaternary cathode material, the relationship between a cell parameter **c** of an axis **c** and a cell parameter **a** of an axis **a** is as follows: **c/a>4.943.**

Therefore, the dopant can inhibit mixed arrangement of kations and can better improve the structural stability of the quaternary cathode material. When the relationship between the cell parameter **c** of the axis **c** and the cell parameter **a** of the axis **a** of the quaternary cathode material is met, the quaternary cathode material has a better laminar crystal structure and is better in structural stability, which can improve the cycling stability and the thermal stability of the battery using the quaternary cathode material, increase the specific capacity of the battery and prolong the cycle life of the battery.

In order to easily understood, brief description is made below on a principle of the quaternary cathode material capable of achieving beneficial effects according to the embodiment of the present invention:

At present, part of Ni in LiNiO₂ is replaced by Co, Al and Mn jointly to obtain the quaternary cathode material. There is still a problem of poor structural stability, cycling stability of the battery taking the quaternary cathode material as the cathode, service life and service safety. As for the quaternary cathode material according to the embodiment of the present invention, on the one hand, the dopant is added into a conventional nickel-cobalt-manganese-aluminum quaternary cathode material, the dopant selecting from at least one of Zr, Al, B, Ti, Mg, Nb, Ba, Si, P, W, Sr and F. The dopant can improve the structural stability of the quaternary cathode material, for example, the doped Zr can enter a transition metal layer of the quaternary cathode material to stabilize the hexagonal structure thereof. The doped aluminum can enter a surface lithium layer of a quaternary cathode material matrix to further support the lithium layer better, and in a high voltage charging and discharging process, when a lot of lithium ions are embedded out, the doped aluminum can keep the stability of a lattice structure of the lithium layer; the doped magnesium can enable the valence state of the transition metal ions in the quaternary cathode material to be increased or decreased so as to further generate holes or electrons to change the energy band structure of the quaternary cathode material, and thus, the intrinsic electron conductivity is improved. The doped aluminum and magnesium further can inhibit mixed arrangement of Li⁺ and Ni²⁺ and more reversible lithium positions can be reserved, so that the reversible specific discharge capacity of the battery using the quaternary cathode material is improved. Thus, the dopant can better improve the structural stability of the quaternary cathode material, and can improve the cycling stability and the thermal stability of the battery using the quaternary cathode material. On the other hand, in the X-ray diffraction pattern of the quaternary cathode material according to the embodiment of the present invention, the relationship: **c/a>4.943** between the cell parameter **c** of the axis **c** and the cell parameter **a** of the axis **a** is met. The inventor finds that when the relationship between the cell parameter **c** of the axis **c** and the cell parameter **a** of the axis **a** is met, the quaternary cathode material has a better laminar crystal structure and lithium ions are easily diffused in the layered structure, such that the specific discharge capacity of the battery using the quaternary cathode material can be improved. Specifically, by controlling types and amounts of the dopants added, the relationship between the cell parameter **c** of the axis **c** and the cell parameter **a** of the axis **a** in the quaternary cathode material can be adjusted simply, so that the relationship: **c/a>4.943** between the cell parameter **c** of the axis **c** and the cell parameter **a** of the axis **a** in the quaternary cathode material can be met simply, the cycling stability and the thermal stability of the battery using the quaternary cathode material can be further improved, and the specific capacity of the battery at high voltage multiplying power can be improved. The battery using the quaternary cathode material is good in performance.

According to the embodiment of the present invention, a chemical structural formula of the quaternary cathode material being LiₓNi_{a'}Co_{b}Mn_{c'}Al_{d}M_{y}O₂, wherein 1≤x≤1.05, 0<y≤0.025, 0.3≤a'≤ 0.95, 0.03≤b≤0.1, 0.01≤c'≤0.05, 0.01≤d≤0.05 and a'+b+c'+d=1.

In particular, the molar content of Li. i.e. x value in the structural formula, in the quaternary cathode material, meets the relationship below: 1≤x≤1.05. In particular, 1.01≤x≤1.035, for example, x can be equal to 1.02, 1.025 and 1.03. Thus, when the molar content of Li. in the quaternary cathode material is within the range, the battery using the quaternary cathode material has a relatively high charge and discharge specific capacity and excellent using performance. When the Li content in the quaternary cathode material is too small, for example x is smaller than 1.0, Ni enters a Li layer easily, which increases the occupancy of transitional metal elements in lithium position, and the charge and discharge specific capacity of the quaternary cathode material is relatively low. When the Li content in the quaternary cathode material is too large, for example x is greater than 1.05, the blended amount of Li in the transitional metal position is too large, Ni evicted by Li from the transitional metal position is more, and Ni enters the Li layer easily, which makes the occupancy of transitional metal elements in lithium position great, so that the charge and discharge specific capacity of the quaternary cathode material is affected.

In particular, the molar content of Co. i.e. value b in the structural formula, in the quaternary cathode material, meets the relationship below: 0.03≤b≤0.1. In particular, 0.05≤b≤0.06, for example, x can be equal to and 0.055 and the like. Therefore, when the molar content of Co in the quaternary cathode material is within the range, Co can improve the structural stability of the quaternary cathode material and does not affect the specific discharge capacity of the quaternary cathode material obviously. When the content of Co is too small, for example, b is smaller than 0.03, Co is easily polarized, which makes the charge and discharge specific capacity of the quaternary cathode material small and the first time discharging efficiency small. When the content of Co is too large, the cost of the quaternary cathode material is high, which does not facilitate scaled production.

In particular, the molar content of Mn. i.e. value c in the structural formula, in the quaternary cathode material, meets the relationship below: 0.01≤c'≤0.05. In particular, 0.02≤c'≤0.03, for example, c' can be equal to and 0.025 and the like. In particular, the molar content of Al. i.e. value d in the structural formula, in the quaternary cathode material, meets the relationship below: 0.01≤d≤ 0.05. In particular, 0.02≤d≤0.03, for example, d can be equal to and 0.025 and the like. Therefore, when the molar contents of Mn and Al in the quaternary cathode material are within the range, the structural stability of the quaternary cathode material can be improved and the specific discharge capacity of the quaternary cathode material is not affected obviously.

In particular, the molar content of Ni. i.e. value a' in the structural formula, in the quaternary cathode material, meets the relationship below: 0.3≤a'≤0.95. In particular, 0.8≤a'≤0.92, for example, a' can be equal to 0.85, 0.9 and the like, and a'+b+c'+d=1.

In particular, in the quaternary cathode material, M is the dopant selected from one or more of Zr, Al, B, Ti, Mg, Nb, B, Si, P, W, Sr and F, and the molar content of M. i.e. value y in the structural formula, in the quaternary cathode material, meets the relationship below: 0<y≤0.0250. In particular, 0.003≤y≤ 0.0220, for example, y can be equal to 0.005, 0.01, 0.015, 0.02 and the like. According to the embodiment of the present invention, the mass fraction of the dopant in the quaternary cathode material can be 3000-8000ppm, for example, 3500ppm, 4000ppm, 4500ppm, 5000ppm, 5500ppm, 6000ppm, 6500ppm, 7000ppm, 7500ppm and the like. Therefore, when the content of the dopant is in the range, the structural stability of the quaternary cathode material can be better improved. The specific discharge capacity of the battery using the quaternary cathode material is not reduced. When the content of the dopant in the quaternary cathode material is too small, for example, the mass fraction of the dopant in the quaternary cathode material is smaller than 3000ppm, the improving effect to the crystal structural stability of the quaternary cathode material is not remarkable at all. When the content of the dopant in the quaternary cathode material is too large, for example, the mass fraction of the dopant in the quaternary cathode material is greater than 8000ppm, the specific discharge capacity of the battery using the quaternary cathode material will be affected. It should be noted that the mass fraction of the dopant in the foregoing quaternary cathode material is a total mass fraction of all the dopants in the quaternary cathode material, for example, when the dopants include various elements co-doped, the mass fraction of the dopant is the mass fraction of all doped elements.

According to the embodiment of the present invention, the dopant can be foregoing one, two, three or four of the dopants, for example, the dopant can be Al and Zr co-doped, AL, Mg and Zr co-doped, Al, Mg, Zr and Ti co-doped and the like. According to the embodiment of the present invention, the dopant can be comprised of Al and Zr or Al, Mg and Zr. Therefore, in the quaternary cathode material formed by co-doping Al, Mg and Zr, the dopants Al, Mg and Zr have a synergistic effect. The doped zirconium can enter a transition metal layer of the quaternary cathode material to stabilize the hexagonal structure thereof. The doped aluminum can enter a surface lithium layer of a quaternary cathode material matrix to further support the lithium layer better, and in a high voltage charging and discharging process, when a lot of lithium ions are embedded out, the doped aluminum can keep the stability of a lattice structure of the lithium layer; the doped magnesium can enable the valence state of the transition metal ions in the quaternary cathode material to be increased or decreased so as to further generate holes or electrons to change the energy band structure of the quaternary cathode material, and thus, the intrinsic electron conductivity is improved. The doped aluminum and magnesium further can inhibit mixed arrangement of Li⁺ and Ni²⁺ and more reversible lithium positions can be reserved, so that the reversible specific discharge capacity of the battery using the quaternary cathode material is improved. Thus, co-doping of aluminum, magnesium and zirconium can better improve the structural stability of the quaternary cathode material, the cycling stability and the thermal stability of the battery using the quaternary cathode material and the specific capacity of the battery at high voltage multiplying power. The battery using the quaternary cathode material is good in performance. In particular, in the quaternary cathode material formed by co-doping Al, Mg and Zr, the mass fraction of the dopant Al can be 2500-3500 ppm, for example 3000 ppm; the mass fraction of the dopant Mg can be 300-500 ppm, for example 350 ppm, 400 ppm, 450 ppm and the like; and the mass fraction of the dopant Zr can be 2500-3500 ppm, for example 3000 ppm. Therefore, when the contents of the dopants Al, Mg and Zr are in the range respectively, the structural stability of the quaternary cathode material can be better improved, and the specific discharge capacity of the battery using the quaternary cathode material is not reduced. The comprehensive performance of the battery using the quaternary cathode material is improved favorably.

According to the embodiment of the present invention, the quaternary cathode material has an α-NaFeO₂ crystal structure, and the space group of the X-ray diffraction pattern of the quaternary cathode material is R-3m. It should be noted that the crystal structure characteristics of the quaternary cathode material can be represented by cell parameters of axes a and c. The crystalline structure of R-3m is a laminar structure formed jointly by a transitional metal-oxygen octahedronal layer taking a transitional metal as a center and the lithium layer. The cell parameter a of axis a is determined according to a distance between the transitional metals, a distance between lithium and a distance between oxygen, and the cell parameter c of axis c is determined according to transitional metal-oxygen-lithium-oxygen. When the transitional metals or excessive lithium in the crystalline structure exist in the transitional metal positions, the contents of the transitional metals and lithium, the radiuses of the element ions and the valence states of the transitional metals will affect the distances between the transitional metals and the transitional metals and oxygen, so that the cell parameters are changed finally. In particular, in the X-ray diffraction pattern of the quaternary cathode material, the relationship between the cell parameter c of the axis c and the cell parameter a of the axis a is as follows: c/a>4.943. Therefore, the quaternary cathode material has a better laminar crystal structure and lithium ions are easily diffused in the layered structure, such that the specific discharge capacity of the battery using the quaternary cathode material can be improved.

The crystalline structure of R-3m changes along with changes of proportions of the transitional metals (Me) and Li and the types and contents of the dopant elements. Therefore, the relationship between the cell parameter c of the axis c and the cell parameter a of the axis a can be adjusted by adjusting the proportions of the transitional metals (Me) and Li and the types and contents of the dopant elements, such that the cell parameter c of the axis c and the cell parameter a of the axis a meet the condition to form a better laminar crystal structure.

In particular, in the X-ray diffraction pattern of the quaternary cathode material, the relationship between the cell parameter c of the axis c and the cell parameter a of the axis a further meets a relationship: 3a+5.555≤c≤3a+5.590. Therefore, when the relationship between the cell parameter c of the axis c and the cell parameter a of the axis a is met, the quaternary cathode material has a better layered crystal structure and lithium ions are easily diffused in the layered structure, such that the specific discharge capacity of the battery using the quaternary cathode material can be improved. More in particular, the numerical range of the cell parameter a of the axis a can be 2.80-2.90, preferably, 2.86-2.87, for example, 2.85, 2.86, 2.87 and the like, and the numerical range of the cell parameter c of the axis c can be 14.10-14.30, preferably, 14.19-14.20, for example, 14.19, 14.2, 14.25 and the like. Therefore, when the cell parameter c of the axis c and the cell parameter a of the axis a are within the range, the quaternary cathode material has a better layered crystal structure and lithium ions are easily diffused in the layered structure, such that the specific discharge capacity of the battery using the quaternary cathode material can be improved.

According to the embodiment of the present invention, in the X-ray diffraction pattern of the quaternary cathode material, diffraction peak intensities of a surface I₁₀₂, a surface I₀₀₆ and a surface I₁₀₁ meets a following relationship: R=(I₁₀₂+I₀₀₆)/I₁₀₁ and 0.4≤R≤0.44. Therefore, when the R value is in the range, the orderliness of a hexagonal crystal structure of the quaternary cathode material is high, so that de-intercalation of lithium ions in the crystal structure is facilitated and the structural stability and the thermal stability of the quaternary cathode material can be further improved. Therefore, the specific discharge capacity of the battery using the quaternary cathode material is improved and the cycle life of the battery using the quaternary cathode material is prolonged.

According to the embodiment of the present invention, in the X-ray diffraction pattern of the quaternary cathode material, diffraction peak intensities of a surface a surface I₁₀₃ and a surface I₁₀₄ meets a following relationship: 1.921<I_{003/}I₁₀₄≤2. In particular, a diffraction peak of the surface I₀₀₃ reflects a hexagonal structure, and a diffraction peak of the surface I₁₀₄ reflects a hexagonal structure and a cubic structure. When 1.921<I₀₀₃/I₁₀₄≤2, there is little mixed arrangement of lithium ions and nickel ions in the quaternary cathode material. The structural stability of the quaternary cathode material is high, and the cycling stability of the battery using the quaternary cathode material is better and the cycle life of the battery using the quaternary cathode material is longer.

To sump up, in the quaternary cathode material according to the embodiment of the present invention, the dopant can inhibit mixed arrangement of kations and can better improve the structural stability of the quaternary cathode material. When the relationship between the cell parameter c of the axis c and the cell parameter a of the axis a of the quaternary cathode material is met, the quaternary cathode material has a better laminar crystal structure and is better in structural stability, which can improve the cycling stability and the thermal stability of the battery using the quaternary cathode material, increase the specific capacity of the battery and prolong the cycle life of the battery.

According to another typical embodiment of the present disclosure, a method for preparing any one quaternary cathode material is further provided. The method comprises the following steps of performing dry mixing on a nickel-cobalt-manganese-aluminum quaternary precursor, a lithium source and a dopant source to obtain a dry mixture; calcining the dry mixture in an oxygen containing atmosphere for 10-15 hours at 700-800°C to obtain a quaternary cathode material precursor; and cladding and calcining the quaternary cathode material precursor in the oxygen containing atmosphere by using an aluminum source and a boron source to obtain the quaternary cathode material, wherein a cladding and calcining temperature is 250-350°C and time is 4-8 hours. The dopant can be doped into the quaternary cathode material by adopting a conventional flow to obtain the quaternary cathode material of the present disclosure. The preparation method is simple, which facilitates industrial implementation. The last step cladding treatment does not mean formation of a cladding layer with a clear cladding structure on the surface of the quaternary cathode material precursor but mean doping an aluminum source and a boron source to the surface of the quaternary cathode material precursor, which can inhibit side reactions between the surfaces of particles and the electrolyte and reduce oxygen release amount, thereby improving the conductivity of the particles and the lithium ion diffusion rate of an interface, and improving the electrical prpoperty.

In one aspect of the present invention, the present invention provides a quaternary cathode material. According to the embodiment of the present invention, the cathode includes any one quaternary cathode material. Therefore, the cathode has all characteristics and advantages of any one quaternary cathode material, and no more detailed description is provided. In general, the cathode is stable in structure and has more excellent cycle performance and rate capability.

In another aspect of the present invention, the present invention provides a battery. According to the embodiment of the present invention, the battery includes the cathode, the anode and the diaphragm, wherein the diaphragm is arranged between the cathode and the anode; at least a part of the cathode, at least a part of the anode and at least a part of the diaphragm are immersed in the electrolyte. Therefore, the battery has all characteristics and advantages of any one cathode, and no more detailed description is provided. In general, the battery has good cycling stability and thermal stability and has a higher specific capacity at high voltage multiplying power.

Explanation will be made on scheme of the present invention below in combination with the embodiments of the present invention. Those skilled in the art will understand that the embodiments below are merely used for explaining the present invention and are not to limit the scope of the present invention. The embodiments without specific technologies or conditions indicated are carried out according to technologies or conditions described by literature in the field or description of a product. The used reagents or instruments not indicated by manufacturers are conventional products which can be purchased in the market.

### Example 1 Preparation of a quaternary cathode material A

(1) A high nickel precursor Ni_{0.88}Co_{0.06}Mn_{0.03}Al_{0.03}(OH)₂, a Li source (LiOH) and a Zr source (Zr(OH)₄) are mixed by a dry process to form a mixture, wherein the molar ratio of the high nickel precursor Ni_{0.88}Co_{0.06}Mn_{0.03}Al_{0.03}(OH)₂, the Li source (LiOH) and the Zr source (Zr(OH)₄) is 1:0.003:1.025; and the mixture is calcined, cooled, smashed and screened to obtain a Zr-doped quaternary cathode material matrix, wherein calcining is continued for 8 hours in an oxygen atmosphere at 700°C, and in the Zr-doped quaternary cathode material matrix, the mass fraction of Zr is 3000 ppm; and
(2) The Zr-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material A, wherein calcining treatment is continued for 6 hours at an oxygen atmosphere at 300°C.

### Example 2 Preparation of a quaternary cathode material B

(1) A high nickel precursor Ni_{0.88}Co_{0.06}Mn_{0.03}Al_{0.03}(OH)₂, a Li source (LiOH) and an Al source (Al₂O₃) are mixed to form a mixture, wherein the molar ratio of the high nickel precursor Ni_{0.88}Co_{0.06}Mn_{0.03}Al_{0.03}(OH)₂, the Li source (LiOH) and the Al source (Al₂O₃) is 1:0.003:1.025; and the mixture is calcined, cooled, smashed and screened to obtain an Al-doped quaternary cathode material matrix, wherein calcining is continued for 8 hours in an oxygen atmosphere at 700°C, and in the Al-doped quaternary cathode material matrix, the mass fraction of Al is 3000 ppm; and
(2) The Al-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material B, wherein calcining treatment is continued for 6 hours at an oxygen atmosphere at 300°C.

### Example 3 Preparation of a quaternary cathode material C

(1) A high nickel precursor Ni_{0.88}Co_{0.06}Mn_{0.03}Al_{0.03}(OH)₂, a Li source (LiOH) and a Zr source (Zr(OH)₄) are mixed to form a mixture, wherein the molar ratio of the high nickel precursor Ni_{0.88}Co_{0.06}Mn_{0.03}Al_{0.03}(OH)₂, the Li source (LiOH) is 1: 1.025; and the mixture is calcined, cooled, smashed and screened to obtain an Al and Zr co-doped quaternary cathode material matrix, wherein calcining is continued for 8 hours in an oxygen atmosphere at 700°C, and in the Al and Zr co-doped quaternary cathode material matrix, the mass fraction of Al is 3000 ppm, and the mass fraction of Zr is 1500 ppm; and
(2) The Al and Zr co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material C, wherein calcining treatment is continued for 6 hours at an oxygen atmosphere at 300°C.

### Example 4 Preparation of a quaternary cathode material D

(1) A high nickel precursor Ni_{0.88}Co_{0.06}Mn_{0.03}Al_{0.03}(OH)₂, a Li source (LiOH) and a Zr source (Zr(OH)₄) are mixed to form a mixture, wherein the molar ratio of the high nickel precursor Ni_{0.88}Co_{0.06}Mn_{0.03}Al_{0.03}(OH)₂, the Li source (LiOH) is 1: 1.025; and the mixture is calcined, cooled, smashed and screened to obtain an Al and Zr co-doped quaternary cathode material matrix, wherein calcining is continued for 8 hours in an oxygen atmosphere at 700°C, and in the Al and Zr co-doped quaternary cathode material matrix, the mass fraction of Al is 3000 ppm, and the mass fraction of Zr is 3000 ppm; and
(2) The Al and Zr co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material D, wherein calcining treatment is continued for 6 hours at an oxygen atmosphere at 300°C.

### Example 5 Preparation of a quaternary cathode material E

(1) A high nickel precursor Ni_{0.88}Co_{0.06}Mn_{0.03}Al_{0.03}(OH)₂, a Li source (LiOH), an Al source (Al₂O₃), a Mg source (Mg(OH)₂) and a Zr source (Zr(OH)₄ are mixed to form a mixture, wherein the molar ratio of the high nickel precursor Ni_{0.88}Co_{0.06}Mn_{0.03}Al_{0.03}(OH)₂, and the Li source (LiOH) is 1: 1.025; and the mixture is calcined, cooled, smashed and screened to obtain an Al and Zr co-doped quaternary cathode material matrix, wherein calcining is continued for 8 hours in an oxygen atmosphere at 700°C, and in the Al and Zr co-doped quaternary cathode material matrix, the mass fraction of Al is 3000 ppm, the mass fraction of Mg is 400 ppm and the mass fraction of Zr is 3000 ppm; and
(2) The Al, Mg and Zr co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material E, wherein calcining treatment is continued for 6 hours at an oxygen atmosphere at 300°C.

### Example 6 Preparation of a quaternary cathode material F

(1) A high nickel precursor Ni_{0.88}Co_{0.06}Mn_{0.03}Al_{0.03}(OH)₂, a Li source (LiOH), a Alsource (Al₂O₃) , a Mg source (Mg(OH)₂) and a Zr source (Zr(OH)₄) are mixed to form a mixture, wherein the molar ratio of the high nickel precursor Ni_{0.88}Co_{0.06}Mn_{0.03}Al_{0.03}(OH)₂ and the Li source (LiOH) is 1:1.025; and the mixture is calcined, cooled, smashed and screened to obtain an Al, Mg and Zr co-doped quaternary cathode material matrix, wherein calcining is continued for 8 hours in an oxygen atmosphere at 700°C, and in the Al, Mg and Zr co-doped quaternary cathode material matrix, the mass fraction of Al is 3000 ppm, the mass fraction of Mg is 900 ppm and the mass fraction of Zr is 3000 ppm; and
(2) The Al, Mg and Zr co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material F, wherein calcining treatment is continued for 6 hours at an oxygen atmosphere at 300°C.

### Example 7 Preparation of a quaternary cathode material G

(1) A high nickel precursor Ni_{0.88}Co_{0.06}Mn_{0.03}Al_{0.03}(OH)₂, a Li source (LiOH), a Mg source (Mg(OH)₂) and a Zr source (Zr(OH)₄) are mixed to form a mixture, wherein the molar ratio of the high nickel precursor Ni_{0.88}Co_{0.06}Mn_{0.03}Al_{0.03}(OH)₂ and the Li source (LiOH) is 1:1.025; and the mixture is calcined, cooled, smashed and screened to obtain an Al, Mg and Zr co-doped quaternary cathode material matrix, wherein calcining is continued for 8 hours in an oxygen atmosphere at 700°C, and in the Al, Mg and Zr co-doped quaternary cathode material matrix, the mass fraction of Al is 2000 ppm, the mass fraction of Mg is 400 ppm and the mass fraction of Zr is 3000 ppm; and
(2) The Al, Mg and Zr co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material F, wherein calcining treatment is continued for 6 hours at an oxygen atmosphere at 300°C.

### Example 8 Preparation of a quaternary cathode material H

(1) A high nickel precursor Ni_{0.88}Co_{0.06}Mn_{0.03}Al_{0.03}(OH)₂, a Li source (LiOH), a Alsource (Al₂O₃) , a Mg source (Mg(OH)₂) and a Zr source (Zr(OH)₄) are mixed to form a mixture, wherein the molar ratio of the high nickel precursor Ni_{0.88}Co_{0.06}Mn_{0.03}Al_{0.03}(OH)₂ and the Li source (LiOH) is 1:1.025; and the mixture is calcined, cooled, smashed and screened to obtain an Al, Mg and Zr co-doped quaternary cathode material matrix, wherein calcining is continued for 8 hours in an oxygen atmosphere at 700°C, and in the Al, Mg and Zr co-doped quaternary cathode material matrix, the mass fraction of Al is 4500 ppm, the mass fraction of Mg is 400 ppm and the mass fraction of Zr is 3000 ppm; and
(2) The Al, Mg and Zr co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material H, wherein calcining treatment is continued for 6 hours at an oxygen atmosphere at 300°C.

### Example 9 Preparation of a quaternary cathode material I

(1) A high nickel precursor Ni_{0.88}Co_{0.06}Mn_{0.03}Al_{0.03}(OH)₂, a Li source (LiOH), an Al source (Al₂O₃), a Mg source (Mg(OH)₂), a Zr source (Zr(OH)₄) and a Ti source (TiO₂) are mixed to form a mixture, wherein the molar ratio of the high nickel precursor Ni_{0.88}Co_{0.06}Mn_{0.03}Al_{0.03}(OH)₂ and the Li source (LiOH) is 1:1.025; and the mixture is calcined, cooled, smashed and screened to obtain an Al, Mg, Zr and Ti co-doped quaternary cathode material matrix, wherein calcining is continued for 8 hours in an oxygen atmosphere at 700°C, and in the Al, Mg, Zr and Ti co-doped quaternary cathode material matrix, the mass fraction of Al is 3000 ppm, the mass fraction of Mg is 400 ppm, the mass fraction of Zr is 1500 ppm, and the mass fraction of Ti is 1500 ppm; and
(2) The Al, Mg, Zr and Ti co-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material I, wherein calcining treatment is continued for 6 hours at an oxygen atmosphere at 300°C.

### Comparative example 1 Preparation of a quaternary cathode material J

(1) A high nickel precursor Ni_{0.88}Co_{0.06}Mn_{0.03}Al_{0.03}(OH)₂ and a Li source (LiOH) are calcined, cooled, smashed and screened, wherein the molar ratio of the high nickel precursor Ni_{0.88}Co_{0.06}Mn_{0.03}Al_{0.03}(OH)₂ and the Li source (LiOH) is 1:1.025, wherein calcining is continued for 8 hours in an oxygen atmosphere at 700°C to obtain the quaternary cathode material matrix; and
(2) The Al-doped quaternary cathode material matrix formed in the step (1) is coated with the Al source (Al₂O₃) and the boron source (H₃BO₃) successively, wherein the mass ratio of the quaternary cathode material matrix, the Al source (Al₂O₃) and the boron source (H₃BO₃) is 100:0.01:0.01, and calcining treatment is performed to obtain a final quaternary cathode material J.

### X-ray diffraction test:

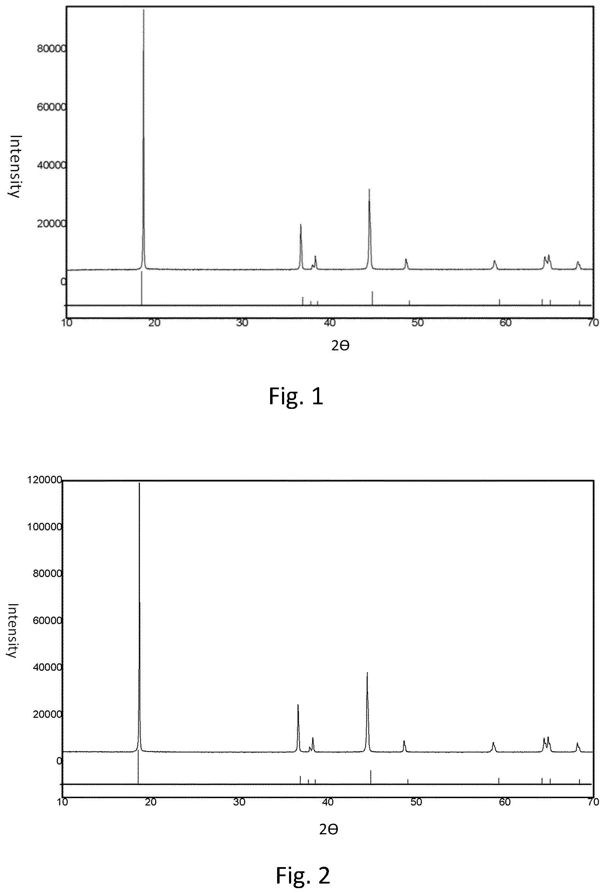

X-ray diffraction patterns of the quaternary cathode materials prepared in the examples 1-9 and the comparative example 1 are tested separately, the Fig. 1 illustrates the X-ray diffraction pattern of the quaternary cathode materials prepared by the example 1, the Fig. 2 illustrates the X-ray diffraction pattern of the quaternary cathode materials prepared by the comparative example 1 and the measured feature diffraction peak in the X-ray diffraction pattern and its intensity data are with reference to a table 1:

**Table 1: X-ray diffraction pattern data table of the quaternary cathode materials prepared in the examples 1-9 and the comparative example 1**

| | I₀₀₃/I₁₀₄ | R | a | c | c/a |
|---|---|---|---|---|---|
| Comparative example 1 | | | | | |
| | 1.9210. | 0.413. | 2.871. | 14.1911. | 4.9429. |
| Example 1 | 1.9750. | 0.419. | 2.871. | 14.1968. | 4.9449. |
| Example 2 | 1.9220. | 0.406. | 2.871. | 14.1931. | 4.9436. |
| Example 3 | 1.9200. | 0.419. | 2.87. | 14.1947. | 4.9459. |
| Example 4 | 1.9570. | 0.42. | 2.87. | 14.1986. | 4.9472. |
| Example 5 | 1.9948. | 0.406. | 2.869. | 14.1998. | 4.9494. |
| Example 6 | 1.9870. | 0.411. | 2.87. | 14.1928. | 4.9452. |
| Example 7 | 1.9500. | 0.405. | 2.869. | 14.1956. | 4.9479. |
| Example 8 | 1.9500. | 0.413. | 2.869. | 14.1902. | 4.9460. |
| Example 9 | 1.9740. | 0.405. | 2.87. | 14.1971. | 4.9467. |

It can be known from the test data in the above table that c/a values in the X-diffraction patterns of the quaternary cathode materials in the examples 1-9 are greater than the c/a value in the X-diffraction pattern of the quaternary cathode material in the comparative example 1, i.e. c/a in the X-diffraction patterns of the quaternary cathode materials in the examples 1-9 is greater than 4.943. It can be known from a subsequent electrochemical property test result that the specific charge and discharge capacities, the first time efficiencies and 50-times cycle retention rates of the quaternary cathode materials in the examples 1-9 are higher than those of the quaternary cathode material in the comparative example 1. It can be verified that according to the quaternary cathode material of the embodiment of the present invention, by adding the dopants into the conventional nickel-cobalt-manganese-aluminum quaternary cathode material and making the relationship between the cell parameter c of the axis c and the cell parameter a of the axis a of the quaternary cathode material in the X-diffraction pattern of the quaternary cathode material to meet a relationship: c/a is greater than 4.943, the quaternary cathode material has a better laminar crystal structure and is better in structural stability, which can improve the cycling stability and the thermal stability of the battery using the quaternary cathode material, increase the specific capacity of the battery.

Similarly, it can be known from the test data in the above table that I₀₀₃/I₁₀₄ values in the X-diffraction patterns of the quaternary cathode materials in the examples 1 and 2 and 4-9 are greater than the I₀₀₃/I₁₀₄ value in the X-diffraction pattern of the quaternary cathode material in the comparative example 1, i.e. when diffraction peak intensities of the surfaces I₀₀₃ and I₁₀₄ in the X-diffraction patterns of the quaternary cathode materials in the examples 1 and 2 and 4-9 meet the relationship: 1.921< I₀₀₃/I₁₀₄≤2, the quaternary cathode material is relatively high in structural stability, and the battery using the quaternary cathode material is better in cycling stability and longer in cycle life.

### Electrochemical property test

The quaternary cathode materials prepared in the examples 1-9 and the comparative example 1, a conductive agent and a binder are prepared into slurry in a certain proportion respectively, the slurry is coated to an aluminum foil, the aluminum foil is subjected to vacuum drying and rolling to prepare an cathode pole piece, and by taking a lithium metal piece as a anode, the electrolyte includes a 1.15 M lithium Hexafluorophosphate (LiPF₆) solution, a solvent is a mixed solvent of ethylene carbonate (EC) and dimethyl carbonate (DMC), the volume ratio of EC and DMC is 1: 1, and a button battery is assembled. The battery is subjected to the electrochemical property test. The electrochemical property test is carried out at 25°C by adopting an indicolite battery test system, and the test voltage range is 3V-4.3V.

The specific charge capacities, the specific discharge capacities of the batteries manufactured by the quaternary cathode materials prepared in the examples 1-9 and the comparative example 1 and the cycle performance of the batteries at different multiplying power and the like are tested respectively, and the first time efficiencies and the 50-times cycle retention rates of the batteries manufactured by the quaternary cathode materials prepared in the examples 1-9 and the comparative example 1 are calculated. The test result is as shown in a table 2:

**Table 2: Electrochemical property data table of the quaternary cathode materials prepared in the examples 1-9 and the comparative example 1**

| | First time charge and discharge | | | 50-times cycle retention rate |
|---|---|---|---|---|
| | Specific charge capacity (mAh/g) | Specific discharge capacity (mAh/g) | First time efficiency (%) | % |
| Comparative Example 1 | 230.7 | 209 | 90.59 | 84.02 |
| Example 1 | 232.3 | 210.7 | 90.70 | 88.44 |
| Example 2 | 225.6 | 204.6 | 90.69 | 86.23 |
| Example 3 | 220.5 | 200.8 | 91.07 | 92.35 |
| Example 4 | 225.8 | 207.5 | 91.90 | 97.44 |
| Example 5 | 236.3 | 219.5 | 92.88 | 99.84 |
| Example 6 | 224.8 | 204.5 | 90.97 | 92.68 |
| Example 7 | 224.8 | 200.1 | 89.01 | 97.95 |
| Example 8 | 223.4 | 204.8 | 91.67 | 92.80 |
| Example 9 | 223.4 | 205.2 | 91.85 | 93.14 |

It can be known from the test data in the above table that the specific charge and discharge capacities, the first time efficiencies and the 50-times cycle retention rates of the quaternary cathode materials in the examples 1-9 are higher than those of the quaternary cathode material in the comparative example 1. It can be verified that according to the quaternary cathode material of the embodiment of the present invention, by adding the dopants into the conventional nickel-cobalt-manganese-aluminum quaternary cathode material and making the relationship between the cell parameter c of the axis c and the cell parameter a of the axis a of the quaternary cathode material in the X-diffraction pattern of the quaternary cathode material to meet a relationship: c/a is greater than 4.943, the dopant can inhibit mixed arrangement of kations and can better improve the structural stability of the quaternary cathode material. The quaternary cathode material has a better laminar crystal structure and is better in structural stability, which can improve the cycling stability and the thermal stability of the battery using the quaternary cathode material, increase the specific capacity of the battery and prolong the service life of the battery.

It can be known, by comparing the electrochemical property test data of the examples 1 and 2 with those (the electrochemical property test data generally refer to the specific charge and discharge capacities, the first time efficiencies and the 50-times cycle retention rates) of the examples 3-9, that the electrochemical property of the quaternary cathode material including two or more elements is superior to that of the quaternary cathode material including only one element. The quaternary cathode materials in the examples 5-8 are doped by three elements: Al, Mg and Zr and the electrochemical properties of the quaternary cathode materials are superior to those of single-doped and double-doped quaternary cathode materials in other examples. Furthermore, the electrochemical property test data of the quaternary cathode material in the example 6 is obvious superior to those of other examples. Therefore, it is verified that in the quaternary cathode material formed by co-doping Al, Mg and Zr, the mass fraction of the dopant Al is 2500-3500 ppm, the mass fraction of the dopant Mg is 300-500 ppm and the mass fraction of the dopant Zr is 2500-3500 ppm, so that the structural stability of the quaternary cathode material can be better improved, and the specific discharge capacity of the battery using the quaternary cathode material is not reduced. The comprehensive performance of the battery using the quaternary cathode material is improved favorably. The mass fractions of the dopants are too large or too small relative to the range, which is harmful to improve the comprehensive performance of the battery.

### Thermal stability test

The quaternary cathode materials in the examples 1, 2, 4 and 5, 7-9 and the comparative example 1 are subjected to the thermal stability test separately by differential scanning calorimetry, and the test result is as shown in a table 3:

| | Comparative example 1 | Example 1 | Example 2 | Example 4 | Example 5 | Example 7 | Example 8 | Example 9 |
|---|---|---|---|---|---|---|---|---|
| Peak temperature (°C) of exothermic peak | 203.04 | 206.24 | 205.78 | 226.63 | 232.36 | 229 | 214.81 | 216.71 |

The peak temperature values of exothermic peak in the table are the exothermic peak temperatures at which the quaternary cathode materials are reacted with the electrolyte. The higher the values are, the better the thermal stability of the quaternary cathode materials are. It can be known from the test data in the above table that the thermal stability of the quaternary cathode materials in the examples 1, 2, 4 and 5 and 7-9 is higher than that in the comparative example 1. It can be verified that according to the quaternary cathode material of the embodiment of the present invention, by adding the dopants into the conventional nickel-cobalt-manganese-aluminum quaternary cathode material and making the relationship between the cell parameter c of the axis c and the cell parameter a of the axis a of the quaternary cathode material in the X-diffraction pattern of the quaternary cathode material to meet a relationship: c/a is greater than 4.943, the quaternary cathode material is better in structural stability. Further, the thermal stability of the quaternary cathode material formed by doping the three elements: Al, Mg and Zr in a specific proportion in the example 5 is superior to that of other examples. Thus, it is verified that in the quaternary cathode material formed by co-doping Al, Mg and Zr, the mass fraction of the dopant Al is 2500-3500 ppm, the mass fraction of the dopant Mg is 300-500 ppm and the mass fraction of the dopant Zr is 2500-3500 ppm, which can better improve the structural stability of the quaternary cathode material.

In the description, description with reference to "one embodiment", "some embodiments" and the like means specific features, structures, materials or characteristics described in combination with the embodiments or the exemplary embodiments are included in at least one embodiment or the exemplary embodiment of the present invention. In the present specification, the schematic representation of the above terms does not necessarily mean the same embodiment or example. Furthermore, the particular features, structures, materials, or characteristics described may be combined in a suitable manner in any one or more embodiments or examples. In addition, various embodiments or examples described in the specification, as well as features of various embodiments or examples, may be combined and combined by those skilled in the art without contradicting each other.

The foregoing is merely illustrative of the preferred embodiments of the present invention and is not intended to be limiting of the present invention, and for those skilled in the art, the present invention may have various changes and modifications. Any modifications, equivalent substitutions, improvements, and the like within the spirit and principles of the invention are intended to be included within the scope of the present invention.

## Claims

1. A quaternary cathode material, a chemical structural formula of the quaternary cathode material being LiₓNi_{a'}Co_{b}Mn_{c'}Al_{d}M_{y}O₂, 1≤x≤1.05, 0<y≤0.025, 0.3≤a'≤0.95, 0.03≤b≤0.1, 0.01≤c'≤0.05, 0.01 ≤d≤0.05 and a'+b+c'+d=1;
and M is a dopant selecting from at least one of Zr, Al, B, Ti, Mg, Nb, Ba, Si, P, W, Sr and F;
and the quaternary cathode material has an α-NaFeO₂ type crystal structure; a space group of an X-ray diffraction pattern of the quaternary cathode material is R-3m, and a relationship between a cell parameter **c** of an axis **c** and a cell parameter **a** of an axis **a** is as follows: **c/a**>4.943.

2. The quaternary cathode material according to claim 1, wherein in the X-ray diffraction pattern of the quaternary cathode material, the relationship between a cell parameter **c** of an axis **c** and a cell parameter **a** of an axis **a** is as follows: **3a+5.555≤c≤3a+5.590.**

3. The quaternary cathode material according to claim 2, wherein a numerical range of the cell parameter **a** of the axis **a** is 2.80-2.90, preferably 2.86-2.87, and a numerical range of the cell parameter **c** of the axis **c** is 14.10-14.30, preferably 14.19-14.20.

4. The quaternary cathode material according to claim 1, wherein in the X-ray diffraction pattern of the quaternary cathode material, diffraction peak intensities of a surface I₀₀₃ and a surface I₁₀₄ meets a following relationship: 1.921<I_{003/}I₁₀₄≤2.

5. The quaternary cathode material according to claim 1, wherein in the quaternary cathode material, a mass fraction of the dopant is 3000-8000ppm.

6. The quaternary cathode material according to claim 1, wherein the dopant is comprised of Al and Zr, or the dopant is comprised of Al, Mg and Zr.

7. The quaternary cathode material according to claim 5 or 6, wherein in the quaternary cathode material, a mass fraction of the dopant Al is 2500-3500ppm, a mass fraction of the dopant Mg is 300-500ppm and a mass fraction of the dopant Zr is 2500-3500ppm.

8. A method for preparing the quaternary cathode material as defined in any one of claims 1-7, the method comprising:
performing dry mixing on a nickel-cobalt-manganese-aluminum quaternary precursor, a lithium source and a dopant source to obtain a dry mixture;
calcining the dry mixture in an oxygen-containing atmosphere for 10-15 hours at 700-800°C to obtain the quaternary cathode material precursor; and
cladding and calcining the quaternary cathode material precursor in the oxygen-containing atmosphere by using an aluminum source and a boron source to obtain the quaternary cathode material, wherein a cladding and calcining temperature is 250-350°C and time is 4-8 hours.

9. An cathode, comprising the quaternary cathode material as defined in any one of claims 1-7.

10. A battery, comprising an cathode, a anode, a diaphragm and an electrolyte, wherein the diaphragm is arranged between the cathode and the anode; at least a part of the cathode, at least a part of the anode and at least a part of the diaphragm are immersed in the electrolyte, the cathode being the cathode defined in claim 9.
